# EUROPÄISCHE PATENTSCHRIFT

(11) **EP 1 778 423 B1**
(45) Veröffentlichungstag und Bekanntmachung des Hinweises auf die Patenterteilung: **13.10.2010**
(21) Anmeldenummer: 05763912.2
(22) Anmeldetag: 10.08.2005
(51) Int. Cl.: B21D 43/12, B65G 15/58

(54) **VERFAHREN UND VORRICHTUNG ZUM FÖRDERN VON ZU BEARBEITENDEN GEGENSTÄNDEN**
METHOD AND DEVICE FOR CONVEYING OBJECTS FOR MACHINING
PROCEDE ET DISPOSITIF POUR LE TRANSPORT D'OBJETS A USINER

(30) Priorität: 18.08.2004 CH 135704; 30.08.2004 CH 143404
(43) Veröffentlichungstag der Anmeldung: 02.05.2007
(73) Patentinhaber: Soudronic AG, 8962 Bergdietikon (CH)
(72) Erfinder: GYSI, Peter, CH-5454 Bellikon (CH)
(74) Vertreter: Schalch, Rainer
(86) Internationale Anmeldenummer: PCT/CH2005/000467
(87) Internationale Veröffentlichungsnummer: WO 2006/017953

(56) Entgegenhaltungen:
- DE-A1- 2 924 755
- US-A- 3 999 495
- US-A- 4 026 226
- US-A- 4 546 873

## Beschreibung

### Hinweis auf verwandte Anmeldungen

Diese Anmeldung beansprucht die Priorität der schweizerischen Patentanmeldung Nr. 1357/04 vom 18.August 2004 und der schweizerischen Patentanmeldung Nr. 1434/04 vom 30. August 2004.

### Hintergrund

Die Erfindung betrifft ein Verfahren zum Fördern von zu bearbeitenden Gegenständen gemäss Anspruch 1 und eine Vorrichtung zur Förderung von Gegenständen gemäss Anspruch 12. Eine bevorzugte Anwendung bzw. Verwendung liegt auf dem Gebiet der Herstellung von Verpackungsdeckeln mit einem Deckelring und einer darüber angeordneten, aufreissbaren Folie.

### Stand der Technik

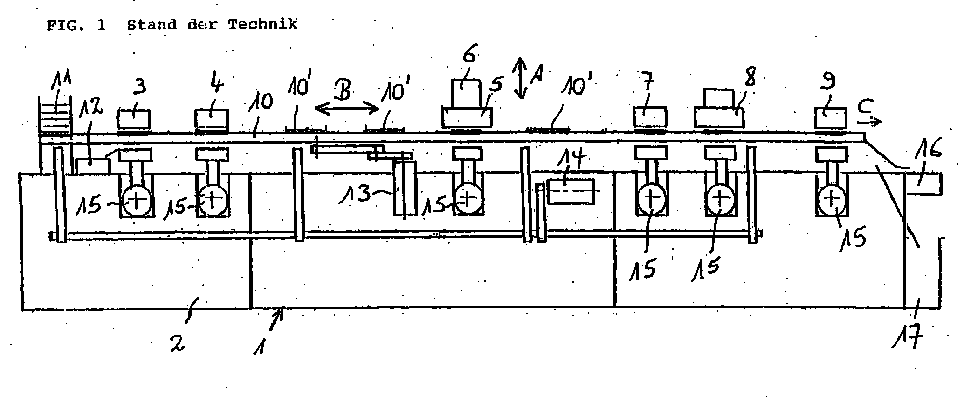

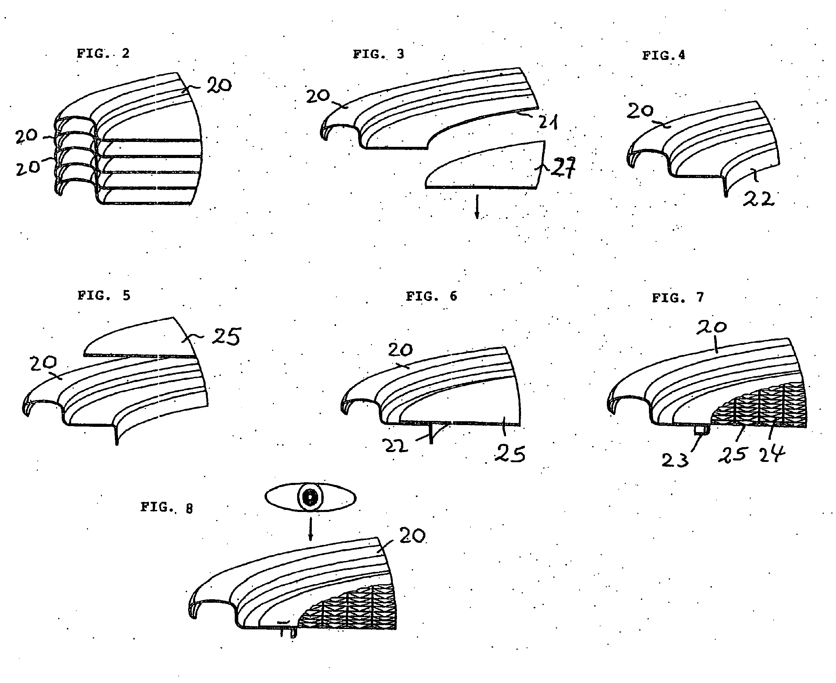

Es ist bekannt, Deckel für dosen- oder büchsenartige Verpackungen als auf der Verpackung oberseitig permanent befestigte Metalldeckel auszuführen, die eine Entnahmeöffnung ausbilden, die bis zum ersten Gebrauch des Verpackungsinhaltes durch eine durch Heisssiegelung aufgebrachte, abreissbare Folie, insbesondere Metallfolie, verschlossen ist. Ein zusätzlicher, über dem Metalldeckel angeordneter Deckel aus Kunststoff macht die Verpackung während der Verbrauchsdauer für deren Inhalt wiederverschliessbar. Eine herkömmliche Bearbeitungseinrichtung zur Herstellung solcher Metalldeckel wird nachfolgend anhand der Figur 1 näher erläutert. Die Figuren 2 bis 8 dienen zur Erläuterung von Herstellungsschritten bei der Herstellung solcher Deckel. US-A-3999495 zeigt ein Verfahren bzw. eine Vorrichtung gemäss Oberbegriff von Anspruch 1 bzw. Anspruch 12.

### Darstellung der Erfindung

Der Erfindung liegt die Aufgabe zu Grunde die Förderung von Gegenständen zu Bearbeitungsstationen mit hoher Taktzahl zu ermöglichen, insbesondere für die Deckelbearbeitung und eine entsprechend rasch und einfach arbeitende Vorrichtung bereitzustellen.

Diese Aufgabe wird mit dem Verfahren nach Anspruch 1 und der Vorrichtung nach Anspruch 12 gelöst.

Durch das Fördern der Gegenstände im Wesentlichen in einer Ebene und die Sicherung bei den Förderschritten bzw. Förderabschnitten gegen ein Abheben ist in Verbindung mit einer Ausgestaltung des Fördermittels mit voneinander beabstandeten Zahnriemen und daran angeordneten Mitnehmern bzw. Auflagen für die Gegenstände eine hohe Taktrate und eine einfache Gestaltung einer Anlage möglich.

Vorzugsweise sind die Zahnriemen in ihrem Abstand einstellbar, damit kann ein Formatwechsel rasch erfolgen. Für einen erweiterten Formatwechsel können die Abstände der Mitnehmer auf den Zahnriemen durch einen Wechsel der Zahnriemen samt der Mitnehmer einfach geändert werden. Bevorzugt ist es, wenn die Mitnehmer deckelformatunabhängig ausgestaltet sind und eine Anpassung an Form und Grösse der Gegenstände bzw. Deckel nur durch die genannten Einstellschritte erfolgt.

Bevorzugt ist es weiterhin, wenn die Mitnehmer zusätzlich zur Befestigung am Zahnriemen in einer Führung geführt werden, was ein, auch nur kurzzeitiges, Herausschwenken - oder kippen der Mitnehmer aus der Förderebene vermeidet und damit sehr hohe Taktzahlen störungsfrei ermöglicht. Bevorzugt erfolgt die Sicherung gegen ein Abheben der Gegenstände von den Mitnehmern durch eine feststehende mechanische Sicherung, z.B. eine Abdeckung, welche die Mitnehmer im Aufnahmebereich für die Gegenstände während der Förderung abdeckt, so dass dabei die Gegenstände nicht nach oben hin von den Mitnehmern abheben können. Vorzugsweise sind die Abdeckung und die Führung für die Mitnehmer im selben Bauelement vereinigt, das als Abdeckleiste für den Zahnriemen ausgestaltet ist. Die Sicherung gegen ein Abheben kann aber für metallische Gegenstände auch magnetisch, insbesondere nur magnetisch erfolgen.

### Kurze Beschreibung der Zeichnungen

Im folgenden wird der Stand der Technik und werden Ausführungsbeispiele der Erfindung anhand der Zeichnungen näher erläutert. Dabei zeigt
Figur 1 eine schematische Seitenansicht einer Fördervorrichtung nach Stand der Technik;
Figur 2 bis 8 Sektoren von Metalldeckeln zur Erläuterung von deren Herstellung;
Figur 9 eine Ausführungsform einer Fördervorrichtung gemäss der Erfindung;
Figur 10 Zahnriemen und Mitnehmer der Vorrichtung von Figur 9 in einer ersten Stellung;
Figur 11 Zahnriemen und Mitnehmer der Vorrichtung von Figur 9 in einer anderen Stellung;
Figur 12 eine teilweise geschnittene Detailansicht einer erfindungsgemässen Vorrichtung;
Figur 13 eine weitere Detailansicht; und
Figur 14 den Auslauf der Vorrichtung.

### Wege zur Durchführung der Erfindung

Anhand der Figuren 1 bis 8 wird kurz der Stand der Technik einer Bearbeitungseinrichtung zur Herstellung von Metalldeckeln mit Abreissfolie erläutert. Figur 1 zeigt dabei eine schematische Seitenansicht einer solchen Einrichtung 1, welche auf einem Maschinengestell 2 mehrere Bearbeitungsstationen 3 bis 9 aufweist. Eine Fördereinrichtung 10, 13, 14 fördert Gegenstände in Förderrichtung, welche durch den Pfeil C angedeutet ist, vom Anfang der Einrichtung beim Stapel 11 bis zum Ende der Einrichtung, wo die Gegenstände über Rutschen in die Ablagen 16 oder 17 gelangen. Vom Stapel 11 werden die Gegenstände auf bekannte Weise abgestapelt und gelangen in die Förderanordnung. Diese weist zwei jeweils einzeln seitlich der Gegenstände angeordnete lange Schienen 10 auf, welche die auf Ablagen 10' bzw. in den Stationen 3 bis 9 liegenden Gegenstände beim Anheben der Stangen 10 mittels des Antriebes 14 in Richtung A nach oben anheben und sie danach durch eine Vorwärtsbewegung in Richtung des Pfeiles B (gleichgerichtet wie der Pfeil C) durch den Kurbelantrieb 13 um einen Betrag nach vorne versetzen. Danach werden die Stangen in Richtung des Pfeiles A nach unten bewegt wobei die Gegenstände wiederum auf ihren Ablagestellen abgelegt werden. Die Stangen 10 werden danach unterhalb der Gegenstandsablagepositionen in Pfeilrichtung B entgegen dem Pfeil C nach hinten bewegt um danach den beschriebenen Vorgang erneut durchzuführen. Die Gegenstände ruhen zwischen dem Transport auf ihren Ablagepositionen bzw. befinden sich in den Bearbeitungsstationen und werden dort bearbeitet. Nach einem Bearbeitungsschritt aller Bearbeitungsstationen erfolgt die erneute Förderung. Figur 2 zeigt gestapelte metallene Deckelrohlinge 20 als Beispiel für Gegenstände, wie sie im Stapel 11 vorliegen. Diese Rohlinge 20 sind z.B. runde Metallscheiben von z.B. 11 cm Durchmesser. Natürlich sind andere Grundformen, z.B. quadratische oder rechteckige Scheiben und andere Durchmesser ohne weiteres möglich. Die Rohlinge 20 sind bereits in einer nicht dargestellten Bearbeitungsmaschine an ihrem Rand wie in Figur 2 gezeigt vorgeformt. In der Figur 2 und den nachfolgenden Figuren ist jeweils nur ein Sektor der ganzen Scheibe dargestellt, um die Zeichnungen zu vereinfachen. In der ersten Bearbeitungsstation 3 von Figur 1 wird durch eine Stanzbearbeitung mit Ober- und Unterwerkzeug eine Öffnung in die Scheibe gestanzt, was in Figur 2 ersichtlich ist, in welcher der Rand der Öffnung mit 21 bezeichnet ist und die ausgestanzte runde Scheibe mit 27. Diese Scheibe gelangt als Abfall in den Behälter 12 von Figur 1. Die Stanzbearbeitungsstation 3 wird - wie dies auch bei den weiteren Stationen der Fall ist - durch einen Antrieb 15 angetrieben. Bei der Bearbeitungsstation 4 erfolgt ein Ziehen des Randes 21 nach unten, wodurch der in Figur 3 gezeigte Verlauf 22 des Randes erzielt wird. Die ringförmigen Deckelrohlinge 20 gelangen nun in die Bearbeitungsstation 5, in welcher eine Folie 25 über der Öffnung des Deckels 20 plaziert und dort durch Heissversiegelung befestigt wird, was in den Figuren 5 und 6 ersichtlich ist. Die Metallfolie 25 ist dazu auf bekannte Weise an ihrer Unterseite mit einer Kunststoffschicht versehen. Der benötigte runde Folienzuschnitt 25 wird in der Regel in der Station 5 aus einer breiten Folienbahn ausgestanzt und über der Mittelausnehmung der ringförmigen Scheibe plaziert und durch die Heissversiegelungsstation wird die Folie unter Hitzeeinwirkung am Rand der runden Ausnehmung des Teils 20 unter Hitzeinwirkung angepresst, so dass die Folie 25 mit dem metallenen Deckel 20 durch Aufschmelzen und nachfolgendes Abkühlen der Kunststoffschicht dicht verbunden wird. Dies ist bekannt und wird hier nicht näher erläutert. Zur Abkühlung kann allenfalls eine Kühlbearbeitungsstation 7 vorgesehen sein. In der Bearbeitungsstation 8 wird die Folie 25 mit einer Prägung 24 (Figur 7) versehen, und es wird weiter der Rand 22 zum fertigen Rand 23 umgebördelt. In einer ebenfalls als Bearbeitungsstation zu bezeichnenden Prüfstation 9 werden die nun fertigen Deckel einer Prüfung unterzogen, welche in der Regel eine Dichteprüfung für die auf dem Deckel aufgebrachte Abziehfolie 25 umfasst. Ist die Folie dicht auf dem restlichen Metalldeckel befestigt, so gelangt der Deckel in die Aufnahme 16 für die fertigen Deckel. Wird eine Undichtigkeit festgestellt, so gelangt der Deckel über die andere dargestellte Rutsche in den Abfallbehälter 17.

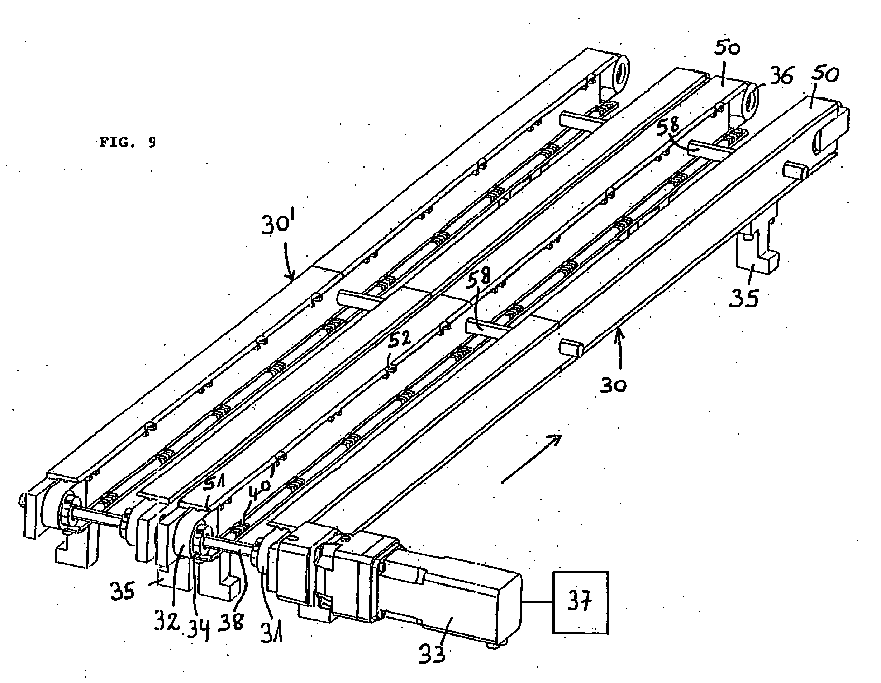

Figur 9 zeigt in schaubildlicher Darstellung eine Fördervorrichtung 30 gemäss einem Ausführungsbeispiel der Erfindung. Diese Fördervorrichtung 30 ist zur Förderung von deckelförmigen Gegenständen der geschilderten Art ausgestaltet, sie könnte indessen auch zur Förderung von anderen Gegenständen verwendet werden, wobei die dazu nötigen Abwandlungen für den Fachmann ohne weiteres möglich sind. Die Fördervorrichtung dient wiederum zum taktweisen Fördern der Gegenstände zur einzelnen Bearbeitungsstationen, welche vorzugsweise die vorgängig geschilderten Bearbeitungsstationen zur Deckelherstellung sind. Diese Bearbeitungsstationen sind in Figur 9 nicht gezeigt, es ist dem Fachmann aber klar, wie er diese entlang der Fördervorrichtung anordnen kann um die jeweilige Bearbeitung durchzuführen. In Figur 9 ist ferner gezeigt, dass eine weitere Fördervorrichtung 30' neben der Fördervorrichtung 30 angeordnet ist. Diese kann durch denselben Antrieb 33, 37 angetrieben sein oder über einen eigenen Antrieb verfügen. Weitere Fördervorrichtungen könnten vorgesehen sein, um die Gesamtzahl der geförderten Gegenstände zu erhöhen. Mit der dargestellten Fördervorrichtung 30, welche nachfolgend im Detail beschrieben wird, können die Gegenstände bzw. Deckel mit hoher Taktzahl von z.B. 200 Gegenstände pro Minute und mit reproduzierbaren Teilschritten zwischen den Bearbeitungsstationen gefördert werden. Es ergibt sich ferner ein flexibles Konzept für einen grossen Formatbereich der Gegenstände bzw. Deckel, welches bei runden Deckeln z.B. von einem Durchmesser von 50 bis 200 mm reichen kann und auch diverse Rechteckformate z.B. für die gängigen Fischdosen aufnehmen kann. Die Fördervorrichtung ist ferner als kompaktes Modul für einspurigen oder wie gezeigt mehrspurigen Aufbau konzipiert.

Bei der gezeigten bevorzugten Ausgestaltung weist die Fördervorrichtung zwei Zahnriemen 31 und 32 auf, welche insbesondere mit ihren Oberflächen in den selben Ebenen liegen, also koplanar verlaufen, und welche am Anfang und am Ende der Fördervorrichtung über Umlenkrollen 34, 36 geführt sind, so dass sich ein endloser Zahnriemenantrieb in der für die Anzahl der Bearbeitungsstationen notwendigen Länge ergibt. Die schrittweise, mit den Bearbeitungsstationen synchronisierte Zahnriemenbewegung wird durch einen Schrittmotor oder Servomotor bewirkt, welcher die Zahnriemen durch Zahnrollen antreibt, wie dies in der Figur mit dem Motor 33 und der Antriebsachse 38 ersichtlich ist. Falls weitere Fördervorrichtungen, wie die Fördervorrichtung 30' vorgesehen sind, so können deren Zahnriemen über denselben Motor über weitere Antriebsachsen angetrieben werden oder über einen eigenen motorischen Antrieb verfügen. Der Motor 33 wird durch eine Steuerung 37 zur Vornahme der schrittweisen Vorwärtsbewegung der Zahnriemen gesteuert, welche Steuerung 37 entweder eine gesamte Steuerung der Deckelherstellungsvorrichtung ist, welche auch die Bearbeitungsstationen steuert, oder welche Steuerung 37 eine Steuerung nur für die Fördervorrichtung ist, welche mit einer übergeordneten Steuerung für die Deckelherstellungsvorrichtung kommuniziert. Der Motor 33 und die weiteren Antriebskomponenten für die Zahnriemen sind an einem Maschinengestell 35 angeordnet, welches in der Figur nur durch die Füsse 35 angedeutet ist. An den Zahnriemen sind Mitnehmer befestigt, welche in Figur 9 generell mit 40 bezeichnet sind, wobei die einander gegenüberliegenden Mitnehmer der Zahnriemen 31 und 32 eine Aufnahme für den jeweiligen Gegenstand bilden. Durch die Zahnriemenbewegung wird diese von den Mitnehmern 40 gebildete Aufnahme entlang des Förderweges und in Richtung des dargestellten Pfeiles C von der Eingangsseite der Fördervorrichtung, welche sich motorseitig befindet, zur Ausgangsseite bei der Umlenkrolle 36 bewegt. In der gezeigten Ausführungsform ist jeweils über dem Zahnriemen und über den Mitnehmern 40 eine Abdeckung 50 vorgesehen, welche jeweils den Zahnriemen und einen Teil der Mitnehmer abdeckt, was nachfolgend noch genauer erläutert wird. Im Bereich der Bearbeitungsstationen weist diese Abdeckung 50 jeweils eine Ausnehmung 52 auf, welche ein Herausnehmen der Gegenstände aus den Mitnehmern 40 erlaubt damit der Gegenstand von den Mitnehmern abgehoben und in der Bearbeitungsstation bearbeitet und nachfolgend wieder in die Mitnehmer abgegeben werden kann. Zwischen den Bearbeitungsstationen sind in der Regel keine Ausnehmungen 52 vorgesehen, so dass dort das Abheben der Gegenstände von den Mitnehmern durch die Abdeckung 50 blockiert wird. Zusätzlich oder anstelle des Blockierens des Abhebens durch die Abdeckung 50 können die Mitnehmer auch magnetisch ausgestaltet sein, was ebenfalls ein Abheben der Gegenstände während des Förderschrittes verhindern kann, wenn der Gegenstand mindestens teilweise aus einem magnetisch festhaltbaren Material besteht.

Bevorzugt ist es, wenn der Abstand der Zahnriemen 31 und 32 zueinander einstellbar ist, wodurch der Abstand der einander gegenüberliegenden Mitnehmer 40 der beiden Zahnriemen einstellbar ist, um die Fördervorrichtung an verschiedene Gegenstandsgrössen anpassen zu können. Dazu können bei der Fördervorrichtung Querverbindungen 58 vorgesehen sein, welche eine einfache Einstellung des Abstandes der Zahnriemen voneinander erlauben. Entsprechend wird auch die Antriebswelle 38 ausgestaltet, um diese Abstandseinstellung zu ermöglichen. Die Abstände der Mitnehmer 40 auf dem jeweiligen Zahnriemen sind durch die Teilung des Zahnriemens und die Mitnehmerbefestigung gegeben. Dieser Abstand kann zur Anpassung an die Gegenstandsgrösse bevorzugterweise derart geändert werden, dass die Zahnriemen gegen einen Satz anderer Zahnriemen mit in anderem Abstand voneinander befestigten Mitnehmern 40 ausgetauscht werden. Auf diese Weise kann durch Abstandseinstellung der Zahnriemen zueinander und kann durch Auswechslung der Zahnriemen mit verschieden beabstandeten Mitnehmern der gewünschte grosse Aufnahmebereich für Gegenstände geschaffen werden. Auf diese Weise kann eine Umrüstung auf verschiedene Gegenstandsgrössen für alle Mitnehmer gleichzeitig auf einfache und rasche Weise erfolgen.

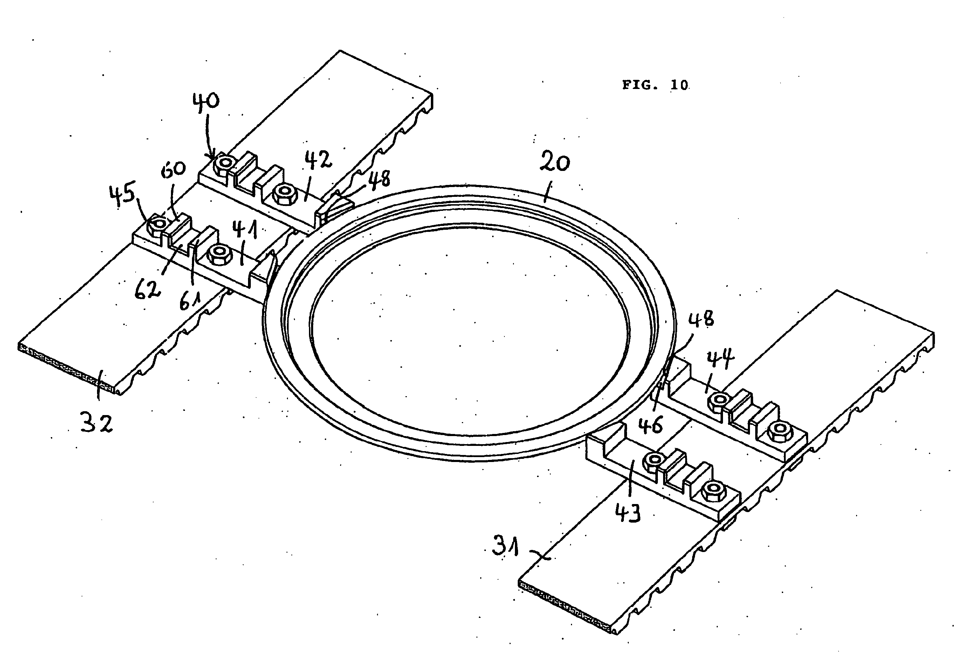

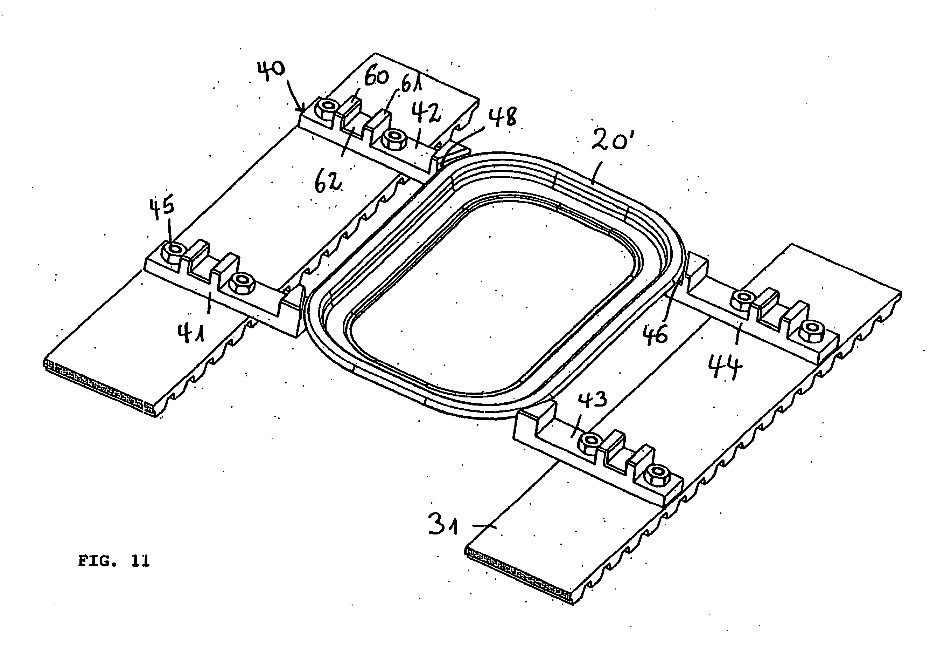

Die Figuren 10 und 11 zeigen schaubildliche Darstellungen von Abschnitten der Zahnriemen 31 und 32 mit den daran angeordneten Mitnehmern, die generell mit 40 bezeichnet und im Einzelnen als die Mitnehmer 41 und 42 auf dem Zahnriemen 32 und 43 und 44 auf dem Zahnriemen 31 dargestellt sind. Die Figuren 10 und 11 zeigen dabei, wie eine Anpassung durch Abstandsverstellung der Zahnriemen zueinander und durch Auswechslung der Zahnriemen mit jeweils verschieden beabstandeten Mitnehmern an verschiedene Deckelformen erfolgen kann. Je nach Grösse und Form des Gegenstandes kann die Anpassung entweder nur durch Abstandseinstellung der Zahnriemen zueinander oder nur durch Auswechslung der Zahnriemen erfolgen oder durch eine Kombination dieser Massnahmen. Die Mitnehmer 41 bis 44 bilden einerseits jeweils eine Auflage 46 für die Gegenstände aus, auf welcher Auflage der Gegenstand aufliegt. Es ist ersichtlich, dass durch die Anordnung der Mitnehmer und das Aufliegen des Gegenstandes der Gegenstand jeweils von unten her und von oben her zugänglich ist und dass der Gegenstand durch Abheben von der Auflage 46 von den Mitnehmern gelöst werden kann und wieder auf den Mitnehmern plaziert werden kann. Die Mitnehmer weisen ferner Anlageflächen 48 auf, welche sich anschliessend an die Auflageflächen 46 nach oben erheben und welche eine seitliche Begrenzung für den Gegenstand bilden. Bevorzugt ist es dabei, wenn die Anlageflächen 48 im Wesentlichen ebene Flächen sind und nicht als gekrümmte Flächen an die Form der Gegenstände angepasst sind. Durch die Einstellbarkeit der Zahnriemen zueinander und den allfälligen Zahnriemenwechsel können die Gegenstände von den Anlageflächen 48 jeweils im Wesentlichen tangential beaufschlagt werden, was durch die ebene Ausgestaltung der Flächen 48 für verschiedenste Gegenstandsformen entlang der Fläche möglich ist. Durch die ebene, nicht formangepasste Ausgestaltung der Anlageflächen 48 ergibt sich somit ein gewünschter grosser Einstellbereich mit den selben Mitnehmern und entsprechend ein geringerer Aufwand, da die Mitnehmer nicht formangepasst sein müssen.

Die Mitnehmer 41 bis 44 sind auf bekannte Weise am Zahnriemen 31 bzw. 32 befestigt, indem der jeweilige Zahn des Zahnriemens abgetragen und durch ein Befestigungselement ersetzt wird, welches mit den Mitnehmern verschraubt wird. Diese Befestigungsart ist dem Fachmann geläufig und wird hier nicht weiter dargestellt. Natürlich sind auch alle weiteren Befestigungsmöglichkeiten von Mitnehmern an Zahnriemen einsetzbar, so z.B. die Klebbefestigung von Mitnehmern.

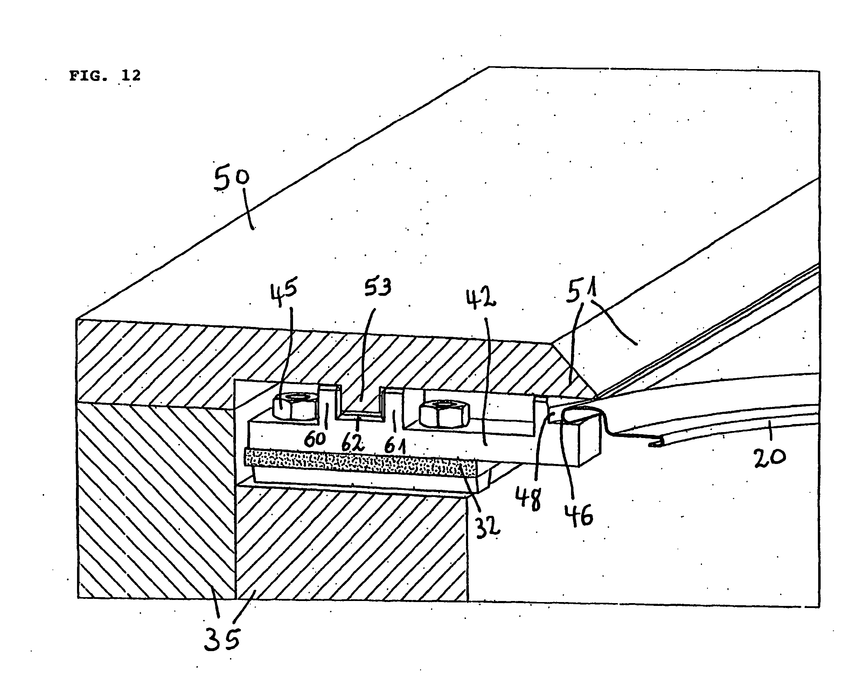

Weiter ersichtlich ist, dass bei der bevorzugten Ausführungsform die Mitnehmer im Bereich des Zahnriemens eine Führung aufweisen, welche im gezeigten Beispiel eine nutenartige Führung mit dem Nutengrund 62 und den beiden Nutenseitenteilen 60 und 61 ist. In Figur 12 ist ersichtlich, wie von oben her eine Schiene 53 in die Nuten der Mitnehmer eingreift, wodurch die Mitnehmer geführt sind und diese Führung insbesondere gegen ein Herausschwenken oder Kippen der Mitnehmer aus der Förderebene bzw. der Oberflächenebene der Zahnriemen wirksam ist. Eine solche Führung erhöht die Störungsfreiheit bei rasch getaktetem Betrieb der Fördervorrichtung und dem jeweiligen Abheben und Aufsetzen der Deckel an den Bearbeitungsstationen von bzw. auf die Mitnehmer erheblich. Die Führung kann natürlich auch seitlich an den Mitnehmern angeordnet sein oder es kann eine seitliche und oberhalb angeordnete Führung kombiniert sein oder es können mehrere oberhalb und/oder seitlich angeordnete Führungen vorhanden sein. Die Figur 12 zeigt, dass die Schiene 53 zugleich Teil der bereits erwähnten Abdeckung bzw. Abdeckleiste 50 ist. Dies ist eine bevorzugte Ausführungsform, die Führung könnte indes auch von einem anderen Bauteil als der Abdeckleiste 50 gebildet sein.

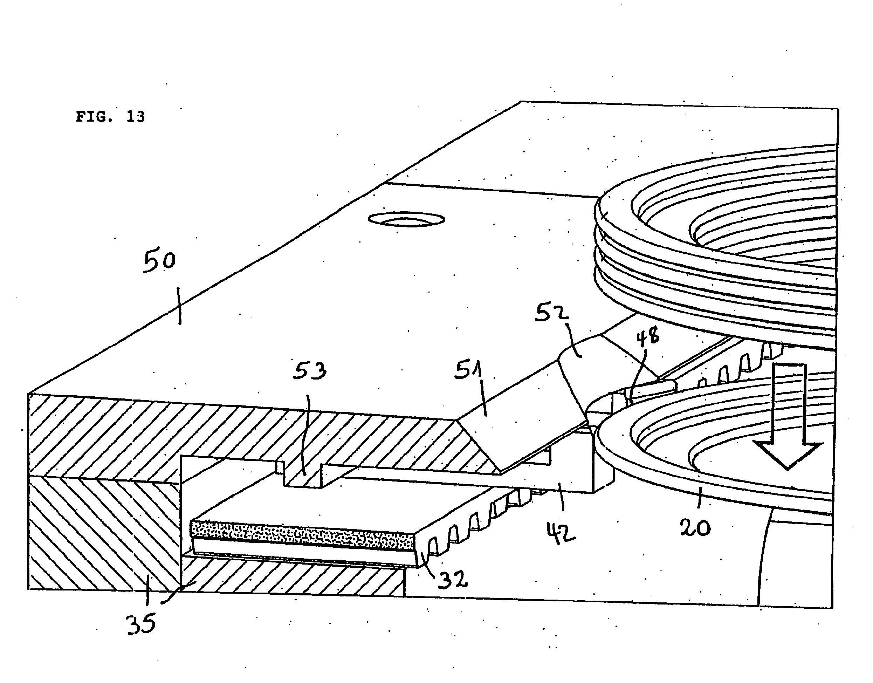

Weiter ist in Figur 12 gut ersichtlich, wie ein auf dem Mitnehmer 42 aufliegender Gegenstand durch den über den Mitnehmer ragenden Vorsprung 51 im Mitnehmerbereich abgedeckt und dadurch gegen ein Abheben vom Mitnehmer entlang des Förderweges gesichert ist. Dies ist ein Beispiel einer bevorzugten mechanischen Sicherung gegen das Abheben, wobei diese hier durch das feststehende Element 51 gebildet wird. Es wäre auch möglich mechanische Abhebesicherungen vorzusehen, welche sich mit den Mitnehmern mitbewegen und beweglich sind, so dass sie im Bereich der Bearbeitungsstationen den Gegenstand freigeben können. Die gezeigte feststehende mechanische Abhebesicherung 51 ist aber sehr einfach und robust ausgestaltet. In Figur 13 ist bei dieser Ausgestaltung ersichtlich, wie im Bereich einer Bearbeitungsstation, oder wie dargestellt im Bereich des Stapels, von welchem die Gegenstände 20 einzeln der Fördervorrichtung zugeführt werden, jeweils eine Ausnehmung 52 den Vorsprung 51 unterbricht, so dass an dieser Stelle ein Abheben und Auflegen des Gegenstandes auf die Mitnehmer möglich ist. Eine solche Ausnehmung ist daher bei jeder Bearbeitungsstation, an der ein Abheben und Auflegen des Gegenstandes erfolgen soll, vorzusehen. Anstelle oder zusätzlich zu der mechanischen Abhebesicherung 51 können die Mitnehmer auch magnetisch ausgeführt sein, so dass sie entlang des Förderweges den jeweiligen Gegenstand magnetisch festhalten. Die Magnetkraft ist dabei natürlich nur so gross gewählt, dass in den Bearbeitungsstationen weiterhin ein Abheben des Gegenstandes durch die Bearbeitungsstation möglich ist. Die Stabilisierung der Mitnehmer durch die erläuterte Führung erleichtert dabei ein Abheben und das Auflegen des Gegenstandes.

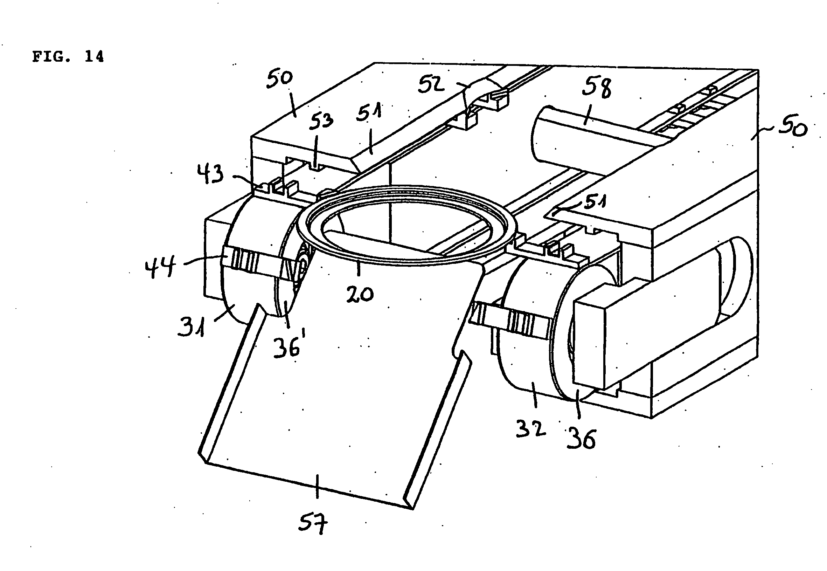

Figur 14 zeigt das Ende der Fördervorrichtung, wobei wiederum dieselben Bezugszeichen dieselben Elemente bezeichnen. Es ist ersichtlich, wie am Ende der Zahnriemen die Mitnehmer bei den Umlenkrollen 36 und 36' nach unten schwenken und den Gegenstand freigeben. Dieser wird über eine Rutsche 57 abgeführt. Der in der Figur dargestellte Gegenstand 20 ist weiterhin ein Deckelring und nicht ein fertig bearbeiteter Deckel, was aber nur zur besseren Darstellung in der Zeichnung so dargestellt ist. Ersichtlich sind wiederum die Abdeckleisten 50, mit der daran angeordneten mechanischen Abhebesicherung 51 und der ebenfalls daran angeordneten Führung 53 für die Mitnehmer.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zum Fördern von zu bearbeitenden Gegenständen (20) entlang einer Mehrzahl von Bearbeitungsstationen, wobei die Gegenstände durch ein lineares Fördermittel (31,32,40) im Wesentlichen in einer Ebene verbleibend gefördert werden, die Gegenstände von ihrer Unterseite und ihrer Oberseite her zugänglich sind, die Gegenstände jeweils bei mindestens einer Bearbeitungsstation vom zeitweise stillstehenden Fördermittel abgehoben, bearbeitet und erneut an das Fördermittel abgegeben werden, und die Gegenstände zwischen Bearbeitungsstationen gegen ein Abheben vom Fördermittel gesichert werden, **dadurch gekennzeichnet, dass** das Fördermittel beabstandet synchron umlaufende Zahnriemen (31, 32) aufweist, an welchen einander zugeordnete Mitnehmer (41, 42; 43,44) jeweils eine Auflage (46) und eine Anlage (48) für einen Gegenstand bilden.

2. Verfahren nach Anspruch 1, wobei das Fördermittel durch Einstellung des Abstandes der Zahnriemen voneinander mit seinen Mitnehmern an die Form und/oder Grösse der Gegenstände angepasst wird.

3. Verfahren nach einem der Ansprüche 1 oder 2, wobei das Fördermittel durch Austausch der Zahnriemen oder des Zahnriemens mit davon unterschiedlich beabstandet angeordneten Mitnehmern an die Form und/oder Grösse der Gegenstände angepasst wird.

4. Verfahren nach einem der Ansprüche 1 bis 3, wobei die Mitnehmer eine im wesentlichen ebenflächige Anlage (48) für die Gegenstände aufweisen und die Auflage (46) und/oder die Anlage (48) bei der Anpassung des Fördermittels an verschiedene Formen und/oder Grössen von Gegenständen unverändert bleiben.

5. Verfahren nach einem der Ansprüche 1 bis 4, wobei mindestens einige der Mitnehmer (41-44) durch eine Führung (53, 60-61) gegen ein Herausschwenken aus der Förderebene während mindestens eines Teils des Förderweges gesichert sind, und insbesondere alle Mitnehmer vorzugsweise entlang des ganzen Förderweges gesichert sind.

6. Verfahren nach Anspruch 5, wobei die Führung aus mindestens einem linearen, feststehenden ersten Führungsteil (53) oberhalb oder seitlich des jeweiligen Zahnriemens und aus einem damit im Eingriff stehenden zweiten Führungsteil (60-61) am Mitnehmer gebildet ist.

7. Verfahren nach einem der Ansprüche 1 bis 5, wobei das Abheben durch ein magnetisches Halten der Gegenstände an den Mitnehmern und/oder durch mindestens ein mechanisches, feststehendes Begrenzungselement (51) verhindert wird, welches eine Abhebebewegung des Gegenstandes zwischen den Bearbeitungsstationen verhindert, indem es eine Bewegung der Gegenstände nach oben begrenzt.

8. Verfahren nach Anspruch 7, wobei das Begrenzungselement ein seitlich über die Mitnehmer ragender, dem Zahnriemenverlauf folgender Vorsprung (51) ist, der Ausnehmungen (52) bei den Bearbeitungsstationen aufweist, welche Ausnehmung ein Abheben der Gegenstände von den Mitnehmern erlauben.

9. Verfahren nach Anspruch 5 und 7, wobei die feststehende Führung (53) gegen ein Herausschwenken der Mitnehmer und der Vorsprung (51) Teile einer Abdeckung (50) oberhalb des Zahnriemens (31,32) sind und insbesondere Teile einer sich über den Zahnriemen erstreckenden Abdeckleiste sind.

10. Anwendung des Verfahrens nach den Ansprüchen 1 bis 9 zum Transport von Deckeln oder Deckelringen zu einer Mehrzahl von Bearbeitungsstationen, insbesondere zum Transport von Deckelrohlingen zu einer Stanzbearbeitungsstation, einer Folienheisssiegelungsstation und gegebenenfalls einer Prägestation.

11. Anwendung nach Anspruch 10, wobei mehrere lineare Fördermittel (30, 30') parallel eingesetzt werden.

12. Vorrichtung zum Fördern von zu bearbeitenden Gegenständen (20) entlang einer Mehrzahl von Bearbeitungsstationen (3-9), wobei die Gegenstände durch ein lineares Fördermittel (31,32,40) im wesentlichen in einer Ebene verbleibend förderbar sind, die Gegenstände vom zeitweise stillstehenden Fördermittel abhebbar und erneut an das Fördermittel abgebbar, und die Gegenstände bei der Förderung gegen ein Abheben vom Fördermittel gesichert sind, **dadurch gekennzeichnet, dass** das Fördermittel von beabstandet synchron umlaufenden Zahnriemen gebildet ist, an welchen einander zugeordnete Mitnehmer (41-44) jeweils eine Auflage (46) und eine Anlage (48) für einen Gegenstand bilden.

13. Vorrichtung nach Anspruch 12, wobei das Fördermittel durch Einstellung des Abstandes der Zahnriemen voneinander mit seinen Mitnehmern an die Form und/oder Grösse der Gegenstände anpassbar ist.

14. Vorrichtung nach einem der Ansprüche 12 oder 13, wobei das Fördermittel durch Austausch der Zahnriemen mit davon unterschiedlich beabstandet angeordneten Mitnehmern an die Form und/oder Grösse der Gegenstände anpassbar ist.

15. Vorrichtung nach einem der Ansprüche 12 bis 14, wobei die Mitnehmer einen Auflageabschnitt (46) und einen im wesentlichen geradflächig geformten Anliegeabschnitt (48) für die Gegenstände aufweisen und der Auflageabschnitt und mindestens der Anliegeabschnitt bei der Anpassung des Fördermittels an verschiedene Formen und/oder Grössen von Gegenständen unverändert bleibt.

16. Vorrichtung nach einem der Ansprüche 12 bis 15, wobei mindestens ein Teil der Mitnehmer (41-44) durch eine Führung (53,60,61,62) gegen ein Herausschwenken aus der Förderebene während mindestens eines Teils des Förderweges gesichert sind.

17. Vorrichtung nach Anspruch 16, wobei die Führung aus mindestens einem linearen, feststehenden ersten Führungsteil (53) oberhalb oder seitlich des jeweiligen Zahnriemens und aus einem damit im Eingriff stehenden zweiten Führungsteil am Mitnehmer gebildet ist.

18. Vorrichtung nach einem der Ansprüche 12 bis 17, wobei das Abheben durch mindestens ein feststehendes Begrenzungselement (51) verhinderbar ist, welches eine Abhebebewegung des Gegenstandes zwischen den Bearbeitungsstationen verhindert.

19. Vorrichtung nach Anspruch 18, wobei das Begrenzungselement ein seitlich über die Mitnehmer ragender, dem Zahnriemenverlauf folgender Vorsprung ist, der Ausnehmungen (52) bei den Bearbeitungsstationen aufweist, welche Ausnehmung ein Abheben der Gegenstände von den Mitnehmern erlauben.

20. Vorrichtung nach Anspruch 16 und 18, wobei die Führung (53) gegen ein Herausschwenken der Mitnehmer und der Vorsprung (51) Teile einer Abdeckung und insbesondere einer Abdeckleiste oberhalb des Zahnriemens sind.

21. Vorrichtung nach Anspruch 12, wobei die Mitnehmer magnetisch ausgeführt sind.

22. Verwendung der Vorrichtung nach den Ansprüchen 12 bis 21 zum Transport von Deckeln oder Deckelringen zu einer Mehrzahl von Bearbeitungsstationen.

23. Verwendung nach Anspruch 22, wobei mehrere Vorrichtungen (30, 30') parallel angeordnet sind.

## Claims

1. Method for conveying objects (20) to be processed along a plurality of processing stations, wherein the objects are conveyed substantially remaining in a plane by means of a linear conveying means (31, 32, 40), the objects are accessible from their bottom side and their top side, the objects are each lifted from the temporarily idle conveying means, processed and returned to the conveying means again at at least a processing station, and the objects are secured against a lift off from the conveying means between processing stations, **characterized in that** the conveying means has spaced, synchronously rotating tooth belts (31, 32), at which tappets (41, 42; 43, 44) which are associated with one another form each a rest (46) and an abutment (48) for an object respectively.

2. Method according to claim 1, wherein the conveying means is adjusted with its tappets to the shape and/or size of the object by adjusting the mutual distance of the tooth belts.

3. Method according to one of the claims 1 or 2, wherein the conveying means is adjusted to the shape and/or size of the object by changing the tooth belts or the tooth belt with tappets which are arranged in a differently spaced way from it.

4. Method according to one of the claims 1 to 3, wherein the tappets have a substantially even abutment (48) for the objects and the rest (46) and/or the abutment (48) remain unchanged during the adjustment of the conveying means to different shapes and/or sizes of objects.

5. Method according to one of the claims 1 to 4, wherein at least some of the tappets (41-44) are secured by a guide (53, 60-61) against a pivoting out of the conveying plane during at least a part of the conveying path, and particularly all tappets are secured preferably along the entire conveying path.

6. Method according to claim 5, wherein the guide is formed at the tappet from at least a linear, fixed first guide part (53) above or sideways of the respective tooth belt and from a second guide part (60-61) engaging with it.

7. Method according to one of the claims 1 to 5, wherein the lift-off is prevented by a magnetic holding of the objects and/or by at least a mechanic, fixed limiting element (51) which prevents a lift-off movement of the object between the processing stations by limiting an upward movement of the objects.

8. Method according to claim 7, wherein the limiting element is a protrusion (51) protruding sideways above the tappet, following the run of the tooth belt, having recesses (52) at the processing stations, which recesses allow a lift-off of the objects from the tappets.

9. Method according to claim 5 and 7, wherein the fixed guide (53) against an outward pivoting of the tappets and the protrusion (51) are parts of a cover (50) above the tooth belt (31, 32) and are particularly parts of a cover strip extending above the tooth belt.

10. Use of the method according to claims 1 to 9 for the transport of lids or lid rings to a plurality of processing stations, particularly for the transport of lid blanks to a punching station, a foil heat sealing station and optionally an embossing station.

11. Use according to claim 10, wherein multiple linear conveying means (30, 30') are used in parallel.

12. Device for conveying objects (20) to be processed along a plurality of processing stations (3-9), wherein the objects are conveyable substantially remaining in a plane by means of a linear conveying means (31, 32, 40), the objects are liftable from the temporarily idle conveying means and again returnable to the conveying means, and the objects are secured against a lift-off from the conveying means, **characterized in that** the conveying means is formed by spaced, synchronously rotating tooth belts, at which tappets (41-44) which are associated with one another form each a rest (46) and an abutment (48) for an object respectively.

13. Device according to claim 12, wherein the conveying means is adjustable to the shape and/or size of the object by adjusting the mutual distance of the tooth belts.

14. Device according to one of the claims 12 or 13, wherein the conveying means is adjustable to the shape and/or size of the object by changing the tooth belts with tappets which are arranged in a differently spaced way.

15. Device according to one of the claims 12 to 14, wherein the tappets have a rest section (46) and a substantially straight shaped abutment section (48) for the objects and the rest section and at least the abutment section remain unchanged during the adjustment of the conveying means to different shapes and/or sizes of objects.

16. Device according to one of the claims 12 to 15, wherein at least some of the tappets (41-44) are secured by a guide (53, 60, 61, 62) against a pivoting out of the conveying plane during at least a part of the conveying path.

17. Device according to claim 16, wherein the guide is formed at the tappet from at least a linear, fixed first guide part (53) above or sideways of the respective tooth belt and from a second guide part engaging with it.

18. Device according to one of the claims 12 to 17, wherein the lift-off is able to be prevented by at least a fixed limiting element (51) which prevents a lift-off movement of the object between the processing stations.

19. Device according to claim 18, wherein the limiting element is a protrusion which protrudes sideways above the tappet and follows the run of the tooth belt, having recesses (52) at the processing stations, which recesses allow a lift-off of the objects from the tappets.

20. Device according to claim 16 and 18, wherein the guide (53) against an outward pivoting of the tappets and the protrusion (51) are parts of a cover and particularly of a cover strip above the tooth belt.

21. Device according to claim 18, wherein the tappets are executed magnetically.

22. Use of the device according to the claims 12 to 21 for the transport of lids or lid rings to a plurality of processing stations.

23. Use according to claim 22, wherein multiple devices (30, 30') are used in parallel.

## Revendications

1. Méthode pour convoyer des objets (20) pour être travaillés le long d'une pluralité de stations d'usinage, les objets étant convoyés, essentiellement restant dans un plan, par un moyen de convoyage (31, 32, 40) linéaire, les objets étant accessibles de leur côté bas et leur côté haut, les objets étant respectivement enlevés, à au moins une station d'usinage, du moyen de convoyage qui est arrêté temporairement, travaillés et restitués de nouveau au moyen de convoyage, et les objets étant sécurisés contre un levage du moyen de convoyage, **caractérisé en ce que** le moyen de convoyage a des courroies crantées (31, 32), distants l'un de l'autre, tournant synchrone, auxquelles attaches (41, 42 ; 43, 44) attribuées l'une à l'autre forment respectivement une surface d'appui horizontale (46) et une surface d'appui verticale (48) pour un objet.

2. Méthode selon la revendication 1, le moyen de convoyage étant ajusté avec ses attaches à la forme et/ou taille des objets en ajustant la distance des courroies crantées l'une par rapport à l'autre.

3. Méthode selon l'une des revendications 1 ou 2, le moyen de convoyage étant ajusté à la forme et/ou taille des objets en changeant les courroies crantées ou la courroie crantée avec des attaches qui sont arrangées à une différente distance d'elle.

4. Méthode selon l'une des revendications 1 à 3, les attaches ayant une surface d'appui verticale (48) pour les objets essentiellement plane et la surface d'appui horizontale (46) et/ou la surface d'appui verticale (48) restant inchangées lors de l'ajustage du moyen de convoyage sur la forme et/ou taille des objets.

5. Méthode selon l'une des revendications 1 à 4, au moins quelques-unes des attaches (41-44) étant sécurisées contre un pivotement au delà du plan de convoyage par un guidage (53, 60-61) durant au moins une partie du chemin de convoyage, et particulièrement toutes les attaches étant sécurisées le long du chemin de convoyage entier.

6. Méthode selon la revendication 5, le guidage étant formé à l'attache d'au moins une première partie de guidage (53) linéaire et fixe au dessus ou latéralement de la respective courroie crantée et d'une deuxième partie (60-61) qui est engrenée avec la première.

7. Méthode selon l'une des revendications 1 à 5, le levage étant empêché par un maintien magnétique des objets aux attaches et/ou par au moins un élément de limitation (51) mécanique et fixe, qui empêche un mouvement de levage de l'objet entre les stations d'usinage en limitant un mouvement des objets vers le haut.

8. Méthode selon la revendication 7, l'élément de limitation étant un épaulement (51) s'élançant latéralement au dessus des attaches et suivant le cours de la courroie crantée, ayant des exclusions (52) aux stations d'usinage, les exclusions permettant un levage des objets des attaches.

9. Méthode selon la revendication 5 et 7, le guidage (53) fixe contre un pivotement des attaches à l'extérieur et l'épaulement (51) étant des parties d'une couvercle (50) au dessus de la courroie crantée (31, 32) et étant particulièrement des parties d'un couvre-joint qui s'étend au dessus de la courroie crantée.

10. Utilisation de la méthode selon les revendications 1 à 9 pour le transport de couvercles ou anneaux de couvercle à une pluralité des stations de convoyage, particulièrement pour le transport des couvercles brutes à une station de poinçonnage, une station de thermosoudage à feuille et si nécessaire une station d'estampage.

11. Utilisation selon la revendication 10, plusieurs moyens de convoyage (30, 30') linéaires étant utilisés en parallèle.

12. Dispositif pour convoyer des objets (20) pour être travaillés le long d'une pluralité de stations d'usinage (3-9), les objets étant convoyés, essentiellement restant dans un plan, par un moyen de convoyage (31, 32, 40) linéaire, les objets étant enlevables du moyen de convoyage qui est arrêté temporairement et pouvant être restitués de nouveau au moyen de convoyage, et les objets étant sécurisés contre un levage du moyen de convoyage, **caractérisé en ce que** le moyen de convoyage est formé par des courroies crantées, distants l'un de l'autre, tournant synchrone, auxquelles attaches (41-44) attribuées l'une à l'autre forment respectivement une surface d'appui horizontale (46) et une surface d'appui verticale (48) pour un objet.

13. Dispositif selon la revendication 12, le moyen de convoyage étant ajustable avec ses attaches à la forme et/ou taille des objets en ajustant la distance des courroies crantées l'une par rapport à l'autre.

14. Dispositif selon l'une des revendications 12 ou 13, le moyen de convoyage étant ajustable à la forme et/ou taille des objets en changeant les courroies crantées avec des attaches qui sont arrangées à une différente distance d'elles.

15. Dispositif selon l'une des revendications 12 à 14, les attaches ayant une section de la surface d'appui horizontale (46) et une section de la surface d'appui verticale (48) formée essentiellement plane pour les objets et la section de la surface d'appui horizontale et au moins la section de la surface d'appui verticale restant inchangées lors de l'ajustage du moyen de convoyage sur formes et/ou tailles différentes des objets.

16. Dispositif selon l'une des revendications 12 à 15, au moins quelques-unes des attaches (41-44) étant sécurisées contre un pivotement au delà du plan de convoyage par un guidage (53, 60, 61, 62) durant au moins une partie du chemin de convoyage.

17. Dispositif selon la revendication 16, le guidage étant formé à l'attache d'au moins une première partie de guidage (53) linéaire et fixe au dessus ou latéralement de la respective courroie crantée et d'une deuxième partie qui est engrenée avec la première.

18. Dispositif selon l'une des revendications 12 à 17, le levage pouvant être empêché par au moins un élément de limitation (51) fixe qui empêche un mouvement de levage de l'objet entre les stations d'usinage.

19. Dispositif selon la revendication 18, l'élément de limitation étant un épaulement s'élançant latéralement au dessus des attaches et suivant le cours de la courroie crantée, ayant des exclusions (52) aux stations d'usinage, les exclusions permettant un levage des objets des attaches.

20. Dispositif selon la revendication 16 et 18, le guidage (53) contre un pivotement des attaches et l'épaulement (51) étant des parties d'une couvercle et particulièrement d'un couvre-joint au dessus de la courroie crantée.

21. Dispositif selon la revendication 12, les attaches étant effectuées magnétiquement.

22. Utilisation du dispositif selon les revendications 12 à 21 pour le transport de couvercles ou anneaux de couvercle à une pluralité des stations d'usinage.

23. Utilisation selon la revendication 22, plusieurs dispositifs (30, 30') étant arrangés en parallèle.
